# EUROPEAN PATENT APPLICATION

(11) **EP 4 317 044 A1**
(43) Date of publication of application: **07.02.2024**
(21) Application number: 22781083.5
(22) Date of filing: 30.03.2022
(51) Int. Cl.: B66C 15/00, B66C 13/00

(54) **CRANE INSPECTION SYSTEM, INSPECTION SYSTEM, ROUTE SETTING PROGRAM, AND INFORMATION TERMINAL**

(30) Priority: 31.03.2021 JP 2021059245
(71) Applicant: Sumitomo Heavy Industries Construction Cranes Co., Ltd., Tokyo 110-0015 (JP)
(72) Inventor: TOIDA, Minoru, Tokyo 110-0015 (JP); MATSUURA, Hironori, Obu-shi, Aichi 474-8550 (JP); KAMASHIMA, Katsuaki, Tokyo 110-0015 (JP); IKEDA, Yu, Tokyo 110-0015 (JP)
(74) Representative: Louis Pöhlau Lohrentz
(86) International application number: PCT/JP2022/015958
(87) International publication number: WO 2022/210873

(57) **Abstract**

A movement route of a moving body is set more easily, compared to the related art. A crane inspection system 100 includes a moving body 40 including a camera 41 and moving around a crane 20, and an information terminal 60 configured to perform an inspecting process, based on imaging data captured by the camera 41. The information terminal 60 includes a control unit 65 configured to set the movement route of the moving body 40 during an inspection, based on a disposition state relating to at least one of a structure, a posture, a position, and a direction of the crane 20.

## Description

### Technical Field

The present invention relates to a crane inspection system, an inspection system, a route setting program, and an information terminal.

### Background Art

In the related art, a technique for performing an inspection on a crane by flying a moving body such as a drone around the crane is known (for example, refer to PTL 1) .

### Citation List

### Patent Literature

[PTL 1] PCT International Publication No. WO2020/218433

### Summary of Invention

### Technical Problem

However, in the crane, a state such as a posture, an assembly pattern (for example, a length of a boom), and a direction of the crane varies.

Therefore, in order to inspect the crane with the moving body, a user has to identify the states of the crane during an inspection, and has to fly the moving body, and it is complicated to set a flight route.

The present invention is made in view of the above-described circumstances, and it is desirable to set a movement route of the moving body more easily, compared to the related art.

### Solution to Problem

According to an aspect of the present invention, there is provided a crane inspection system including a moving body having an imaging unit and moving around a crane, a processing unit configured to perform an inspecting process, based on imaging data captured by the imaging unit, and a route setting unit configured to set a movement route of the moving body during an inspection, based on a disposition state relating to at least one of a structure, a posture, a position, and a direction of the crane.

In addition, according to another aspect of the present invention, there is provided an inspection system including a moving body having an imaging unit and moving around an inspection target whose disposition state varies, a processing unit configured to perform an inspecting process, based on imaging data captured by the imaging unit, and a route setting unit configured to set a movement route of the moving body during an inspection, based on a disposition state relating to at least one of a structure, a posture, a position, and a direction of the inspection target.

In addition, according to still another aspect of the present invention, there is provided a computer-readable medium storing a program that causes a computer to execute a process for setting a movement route of a moving body moving around a crane, the process including functioning as a route setting unit configured to set the movement route of the moving body, based on a disposition state relating to at least one of a structure, a posture, a position, and a direction of the crane.

In addition, according to yet still another aspect of the present invention, there is provided an information terminal configured to set a movement route of a moving body moving around a crane, the information terminal including a route setting unit configured to set the movement route of the moving body, based on a disposition state relating to at least one of a structure, a posture, a position, and a direction of the crane.

### Advantageous Effects of Invention

According to the aspects of the present invention, a movement route of the moving body can be set more easily, compared to the related art.

### Brief Description of Drawings

Fig. 1 is a view illustrating an outline of a crane inspection system according to an embodiment.
Fig. 2 is a block diagram illustrating a control system of a moving body.
Fig. 3 is a side view of the crane.
Fig. 4 is a block diagram illustrating a control system of the crane.
Fig. 5 is a block diagram illustrating a configuration of a management server.
Fig. 6 is a block diagram illustrating a schematic control system of an information terminal.
Fig. 7 is a flowchart illustrating a flow of a route setting process.
Fig. 8 is a flowchart illustrating a flow of the route setting process.
Fig. 9 is a view illustrating a display example of a movement route of the moving body.
Fig. 10A is a view illustrating a display example of a movement route of a moving body in a crane having a structure different from that of the crane of the present embodiment.
Fig. 10B is a view illustrating a display example of a movement route of a moving body in a crane having a structure different from that of the crane of the present embodiment.
Fig. 11A is an example of an information setting screen in the route setting process.
Fig. 11B is an example of an information setting screen in the route setting process.
Fig. 12 is an example of an information setting screen in the route setting process.
Fig. 13 is an example of a setting screen for acquiring information on a position and a direction of the crane.
Fig. 14 is an example of a confirmation screen for setting information.
Fig. 15 is an example of a confirmation screen for setting information.
Fig. 16 is an example of a confirmation screen for setting information.
Fig. 17 is another example of an information setting screen in the route setting process.
Fig. 18 is a view illustrating a display example of a movement route of the moving body.
Fig. 19 is a view illustrating a display example of a movement route of the moving body.

### Description of Embodiments

Hereinafter, embodiments according to the present invention will be described in detail with reference to the drawings.

### [Outline of Crane Inspection System]

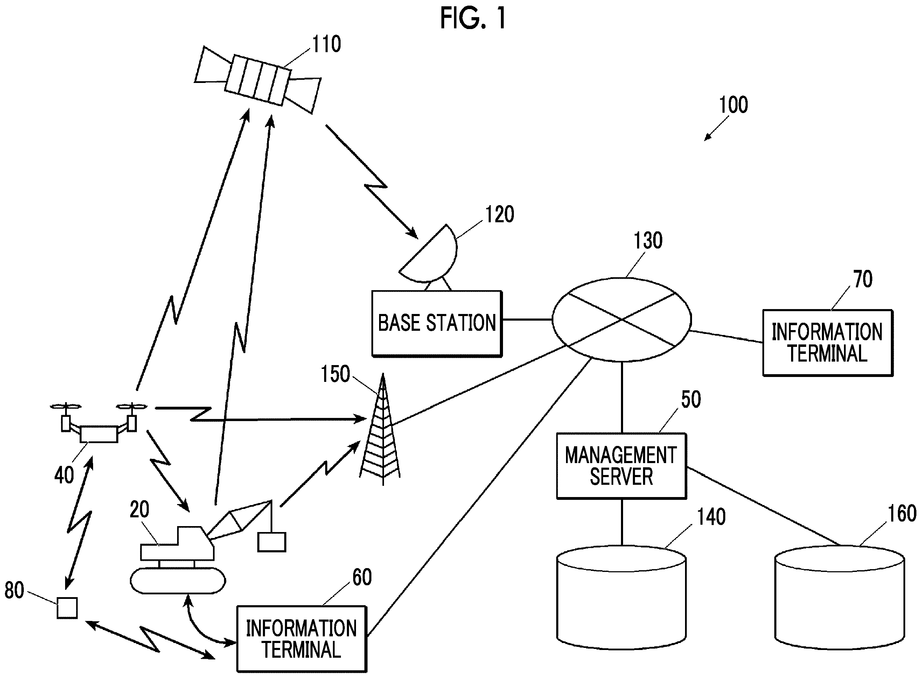

Fig. 1 is a view illustrating an outline of a crane inspection system (hereinafter, simply referred to as an "inspection system") 100 according to an embodiment of the present invention.

As illustrated in Fig. 1, the inspection system 100 includes a crane 20 serving as an inspection target, a moving body 40 moving around the crane 20, information terminals 60 and 70 serving as processing units that perform predetermined processing on data acquired by the moving body 40, a management server 50, and a remote control 80.

The management server 50 is connected to a network 130 serving as a general public line network.

In addition to the management server 50, base stations 120 and 150 and the information terminals 60 and 70 are connected to the network 130. The management server 50 can exchange data with nodes connected to the network 130, that is, the base stations 120 and 150, the moving body 40, and a plurality of the information terminals 60 and 70.

The remote control 80 is configured to be communicable with the moving body 40 and the information terminal 60, and mediates transmission and reception of information (for example, image information acquired by the moving body 40) therebetween. In addition, the remote control 80 is configured to be capable of controlling an operation of the moving body 40, and for example, the moving body 40 can be manually operated.

The base station 120 is a base station of a satellite communication line which can transmit and receive radio waves via a satellite 110, and the base station 150 is a base station of a so-called mobile phone communication line.

When the base stations 120 and 150 receive various data from the moving body 40 or the crane 20, the base stations 120 and 150 transmit various data to the management server 50 via the network 130.

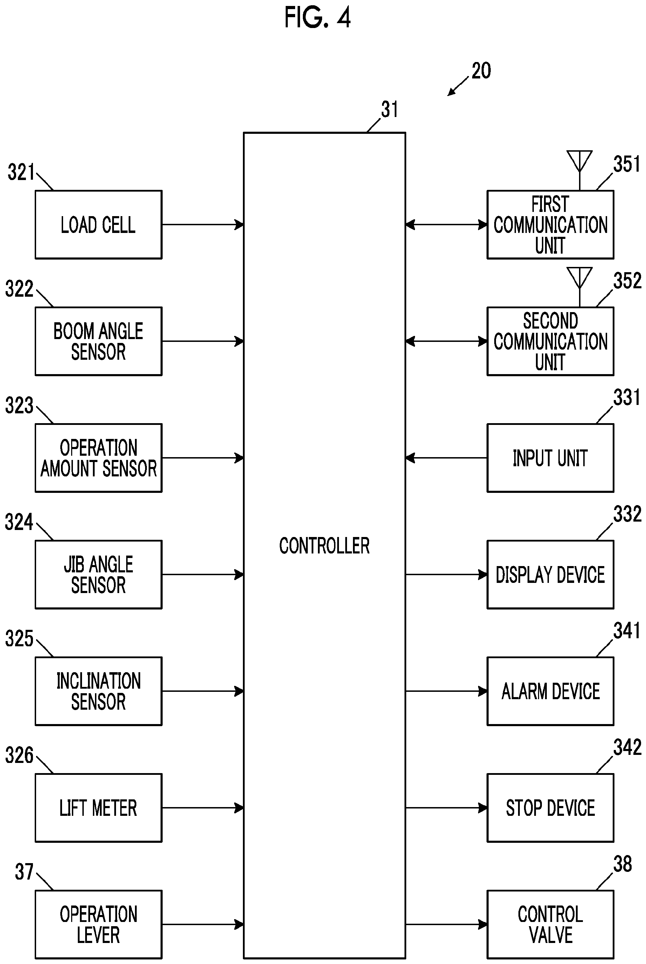

As will be described later, the crane 20 has various sensors that detect a state of each part of the crane 20 itself, and a controller 31 (refer to Fig. 4). The controller 31 transmits information detected by various sensors to the base stations 120 and 150 or receives predetermined information by a first communication unit 351 and a second communication unit 352 (refer to Fig. 4).

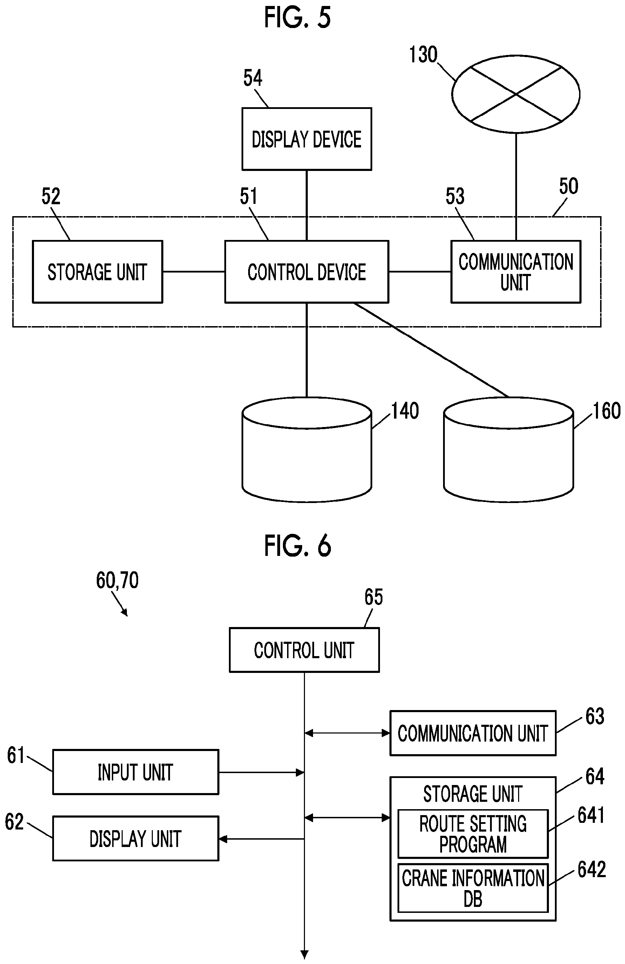

An inspection information database 140 and a customer information database 160 are connected to the management server 50. A control device 51 (refer to Fig. 5) included in the management server 50 stores diagnostic information data (to be described later) received from the moving body 40 and the crane 20 via the base stations 120 and 150, and state information data generated from the diagnostic information data, in the inspection information database 140.

The control device 51 included in the management server 50 transmits the state information data stored in the inspection information database 140 to the predetermined information terminals 60 and 70 via the network 130. The control device 51 included in the management server 50 determines a transmission destination of the information, based on contents of the customer information database 160. For example, the information is transmitted to the information terminal 60 used by a jobsite supervisor who is a user of the crane 20 or a serviceman of a crane maker, or the information terminal 70 used by a manager who is a user relating to a business using the crane 20 at a location away from a jobsite, and is displayed on display screens of the information terminals 60 and 70.

Although Fig. 1 illustrates only one of the crane 20 and the information terminals 60 and 70, the management server 50 is actually configured to transmit and receive the information between a large number of the cranes 20 and a large number of the information terminals 60 and 70.

### [Moving Body]

Here, the moving body 40 will be described.

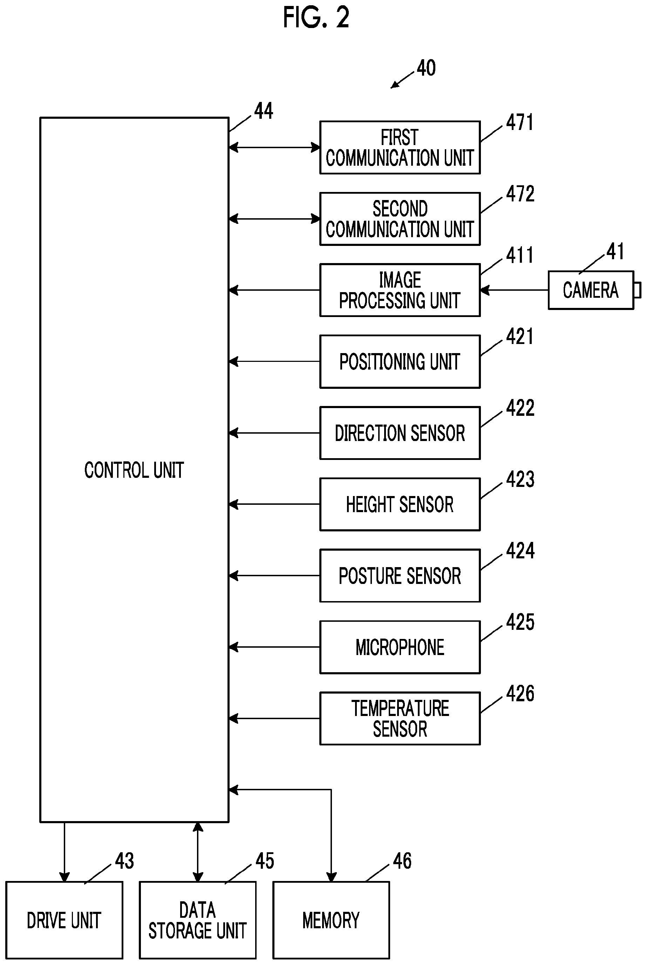

Fig. 2 is a block diagram illustrating a control system of the moving body 40.

The moving body 40 is an unmanned aerial vehicle (unmanned aircraft) which is a so-called drone. The moving body 40 has a plurality of rotors, flies by controlling an output of a motor serving as a drive source of each rotor, and can freely perform raising and lowering operations, forward, rearward, rightward, and leftward movements, and normal and reverse turning.

The moving body 40 moves around the crane 20 serving as the inspection target, images each part of the crane 20, and transmits acquired image data to the predetermined information terminals 60 and 70 and the management server 50.

As illustrated in Fig. 2, the moving body 40 includes a camera 41 serving as an imaging unit, a positioning unit 421, a direction sensor 422, a height sensor 423, a posture sensor 424, a microphone (sound detection sensor) 425, a temperature sensor 426, a drive unit 43, a control unit 44, a data storage unit 45, a memory 46, a first communication unit 471, and a second communication unit 472.

All sensors such as the positioning unit 421, the direction sensor 422, the height sensor 423, the posture sensor 424, the microphone 425, and the temperature sensor 426 which are described above may not be mounted on the moving body 40. The moving body 40 may include at least the camera 41, the positioning unit 421, and the direction sensor 422.

The camera 41 is supported to be directed in a predetermined direction from a machine body of the moving body 40, and images a scene ahead of the line of sight in accordance with a direction of the machine body. The camera 41 can continuously acquire captured images at a constant frame rate. In this manner, it is possible to image a plurality of locations including an inspection location. An image signal obtained by imaging is output to an image processing unit 411 connected to the camera 41. Captured image data having a predetermined format is generated by the image processing unit 411, and is recorded in the memory 46.

The camera 41 is not limited to those which acquire an image of visible light, and an infrared camera for imaging infrared rays may be used. When the infrared camera is used, distance image data can be obtained by using a phase difference method.

In addition, the camera 41 is not limited to a monocular camera, and a stereo camera may be used. In this case, the distance image data can also be obtained.

The positioning unit 421 is a Global Navigation Satelite System (GNSS) receiver, and measures a current position of the moving body 40. A Real Time Kinematic (RTK) which is more highly accurate than a Global Positioning System (GPS) is applied to the positioning unit 421 of the present embodiment.

The direction sensor 422 is a three-axis gyro direction sensor, and detects an advancing direction of the moving body 40 and an inclination angle of the machine body.

For example, the height sensor 423 is an optical type, and projects light downward to detect a height of the machine body from a phase difference generated by reflected light thereof.

The posture sensor 424 includes a three-dimensional acceleration sensor, and detects acceleration in each direction of an X-axis, a Y-axis, and a Z-axis which are defined in the moving body 40. A posture of the machine body can be detected from gravitational acceleration detected for each of these axes.

The microphone 425 has directivity, and detects sound of an object located ahead in a direction the same as that of the line of sight of the camera 41.

The temperature sensor 426 is a so-called radiation thermometer having a non-contact type, and detects a temperature of the object located ahead in the direction the same as that of the line of sight of the camera 41.

Each of these sensors may be used in any desired way as long as desired information can be detected, and a sensor type or a detection principle is not limited to the above-described example.

The first communication unit 471 performs data communication with the base station 120 via the satellite 110.

The second communication unit 472 directly performs data communication with the base station 150.

The drive unit 43 is configured to output a thrust force for a moving operation of the moving body 40, and has a plurality of rotors and a plurality of motors serving as rotational drive sources provided in each of the rotors. The drive unit 43 is controlled by the control unit 44 so that the machine body moves in a target movement direction.

The data storage unit 45 is a non-volatile storage device that stores various information relating to a control program and control of the moving body 40.

The memory 46 stores captured image data captured by the camera 41 and detection data detected by the microphone 425 and the temperature sensor 426.

The memory 46 may include a non-volatile storage device. In addition, the memory 46 may include a removable recording medium. In that case, the captured image data and the detection data can be exchanged with the external information terminals 60 and 70 and the management server 50 by using the removed recording media without using the network 130.

The control unit 44 comprehensively controls each part of the moving body 40, based on a control program stored in the data storage unit 45 and a control command transmitted from the information terminals 60 and 70.

For example, the control unit 44 acquires information on a position and a posture of the moving body 40 during imaging and detecting from the direction sensor 422 and the posture sensor 424, and records the information in the memory 46 in association with the captured image data and the detection data (hereinafter, the captured image data and the detection data which are associated with the information on the position and the posture of the moving body 40 during imaging and detecting will be referred to as "diagnostic information data"). In addition, the control unit 44 transmits the diagnostic information data to the information terminals 60 and 70 and the management server 50 by the first communication unit 471 and the second communication unit 472.

### [Crane]

Subsequently, the crane 20 will be described.

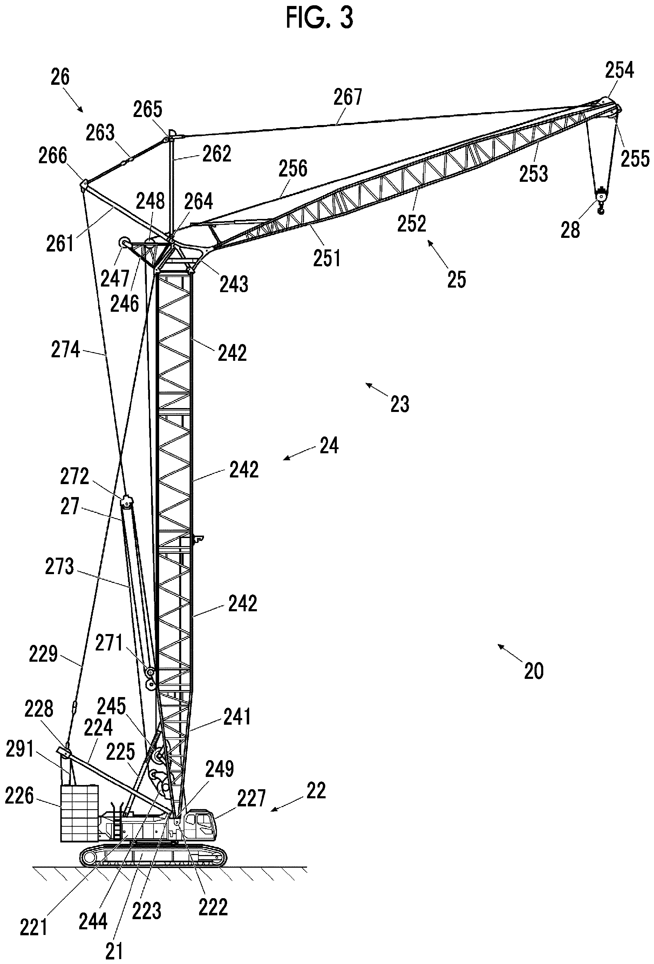

Fig. 3 is a side view of the crane 20.

In the present embodiment, as the crane 20, a so-called mobile tower crane will be described as an example. In describing the crane 20 below, a forward moving direction of the crane 20 (regardless of a facing direction of a rotating platform 22, a predetermined forward moving direction of a lower traveling body 21) will be defined as "front". A rearward moving direction will be defined as "rear". A left hand side in a state of facing the front will be defined as "left". A right hand side in a state of facing the front will be defined as "right".

As illustrated in Fig. 3, the crane 20 includes a crawler-type lower traveling body 21 capable of self-propelling, the rotating platform 22 mounted on the lower traveling body 21 to be capable of turning, and a front attachment 23 attached to a front side of the rotating platform 22 to be capable of derricking.

The rotating platform 22 forms a main body of the crane 20, and has a turning frame 221 extending in a front-rear direction. A boom attachment portion 222 is provided on a front side of the turning frame 221, and a base end 249 of a tower boom 24 (to be described later) is attached to the boom attachment portion 222 to be capable of derricking.

In addition, in the turning frame 221, a mast attachment portion 223 is provided in the vicinity of a rear side of the boom attachment portion 222. A base end of a mast 224 (to be described later) is attached to the mast attachment portion 223 to be pivotable. Furthermore, in the turning frame 221, a base end of a backstop 225 (to be described later) is attached to a rear side of the mast attachment portion 223 to be pivotable.

A counterweight 226 for balancing a weight between the front attachment 23 and a suspended load is disposed on the rear side of the turning frame 221. In addition, a boom derricking winch (not illustrated) is disposed on the rear side of the turning frame 221. On the other hand, a cab 227 in which a driver's seat and various operation devices (all are not illustrated) are disposed is provided on front right side of the turning frame 221.

The front attachment 23 is provided in the rotating platform 22, and transports luggage such as materials between the ground and a high place. The front attachment 23 includes the tower boom 24, a tower jib 25, and a tower strut 26.

The tower boom 24 is attached to the rotating platform 22 to be capable of derricking. The tower boom 24 includes a lower boom 241 whose base end (foot portion) 249 is attached to the boom attachment portion 222 of the turning frame 221 to be capable of derricking, a plurality of (for example, three stages of) intermediate booms 242 whose base end is attached to a tip of the lower boom 241, and an upper boom 243 attached to a tip of the intermediate boom 242 located on a most tip side. A jib derricking winch 244 and a main winding winch 245 (to be described later) are attached to the lower boom 241.

As illustrated, pillar members of the intermediate booms 242 adjacent to each other in a length direction are respectively connected by using a connecting pin. In addition, the intermediate boom 242 located on a lowermost side and the lower boom 241, and the intermediate boom 242 located on an uppermost side and the upper boom 243 are respectively connected by using connecting pins.

The upper boom 243 has a shape whose upper portion protrudes forward when the tower boom 24 is in a standing posture (posture illustrated in Fig. 3). A lower side portion of the upper boom 243 is attached to a tip (upper end) of the intermediate boom 242 located on the uppermost side. The tower jib 25 (to be described later) is attached to a front end side of the upper boom 243 to be capable of derricking, and the tower strut 26 (to be described later) is attached to an upper end side of the upper boom 243 to be capable of oscillating. In addition, a triangular sheave bracket 246 projects rearward in the upper boom 243. A tower guide sheave 247 and a guide sheave 248 are attached to the sheave bracket 246 to be rotatable.

The tower jib 25 is attached to the tip of the upper boom 243 of the tower boom 24 to be capable of derricking. The tower jib 25 is configured to include a lower jib 251 whose base end is attached to the upper boom 243 to be capable of derricking, an intermediate jib 252 attached to a tip of the lower jib 251, and an upper jib 253 provided in a tip of the intermediate jib 252. A guide sheave 254 and a point sheave 255 are attached to a tip side of the upper jib 253 to be rotatable. A main winding rope 256 (to be described later) is wound around the guide sheave 254 and the point sheave 255.

The tower strut 26 is attached to an upper end side of the upper boom 243 of the tower boom 24 to be capable of oscillating. The tower strut 26 connects a first strut 261, a second strut 262, and a third strut 263 by using a first connecting portion 264, a second connecting portion 265, and a third connecting portion 266. In this manner, the tower strut 26 is configured as a triangular structure.

Here, the first connecting portion 264 of the tower strut 26 is attached to the upper end side of the upper boom 243. In this manner, the tower strut 26 is attached to an upper end of the tower boom 24 to be capable of oscillating while the first connecting portion 264 serves as a fulcrum. In addition, one end of a pendant rope 267 is connected to the second connecting portion 265, and the other end of the pendant rope 267 is connected to the tip side of the upper jib 253 of the tower jib 25. Furthermore, a boom-side pendant rope 274 (to be described later) is connected to the third connecting portion 266.

The jib derricking winch 244 is attached to the lower boom 241 of the tower boom 24. The jib derricking winch 244 causes the tower jib 25 to perform derricking via the tower strut 26. The jib derricking winch 244 and the third connecting portion 266 of the tower strut 26 are connected to each other by a jib derricking rope 27.

The jib derricking rope 27 is provided between the jib derricking winch 244 and the tower strut 26. The jib derricking rope 27 is configured to include a lower spreader 271 having a plurality of sheaves attached to the intermediate boom 242 of the tower boom 24, an upper spreader 272 having a plurality of sheaves provided to face the lower spreader 271, a winding rope 273 wound around the jib derricking winch 244 in a state of being sequentially wound around the sheave of the lower spreader 271 and the sheave of the upper spreader 272, and a boom-side pendant rope 274 in which one end is connected to the upper spreader 272 and the other end is connected to the third connecting portion 266 of the tower strut 26.

Therefore, the winding rope 273 is wound and unwound by the jib derricking winch 244. In this manner, the upper spreader 272 moves close to and away from the lower spreader 271, and the tower strut 26 oscillates while the first connecting portion 264 serves as a fulcrum. The oscillation of the tower strut 26 is transmitted to the tower jib 25 via the pendant rope 267. In this manner, the tower jib 25 is configured to perform derricking on the tip side of the tower boom 24.

The main winding winch 245 is located in the vicinity of the upper side of the jib derricking winch 244, and is attached to the lower boom 241 of the tower boom 24. One end side of the main winding rope 256 is wound around the main winding winch 245. The other end side of the main winding rope 256 is attached to a suspended load hook 28 via the guide sheave 248 of the sheave bracket 246, the guide sheave 254 of the tower jib 25, and the point sheave 255. Therefore, the main winding rope 256 is wound and unwound by the main winding winch 245 so that the suspended load hook 28 can be raised and lowered.

The backstop 225 is provided between the turning frame 221 and the lower boom 241 of the tower boom 24. The backstop 225 supports the standing tower boom 24 from behind.

A base end of the mast 224 is attached to the mast attachment portion 223 of the turning frame 221 to be pivotable. The tip of the mast 224 is a free end that is pivotable in the up-down direction or the front-rear direction.

A boom spreader 228 is provided at the tip of the mast 224, and the boom spreader 228 and the upper boom 243 of the tower boom 24 are connected to each other via a pendant rope 229 having a certain length. In addition, a boom derricking rope 291 sequentially wound over the boom spreader 228 and a spreader (not illustrated) on the turning frame 221 side is wound around a tower boom derricking winch (not illustrated) provided in the turning frame 221.

Therefore, the boom derricking rope 291 is wound or unwound by the tower boom derricking winch. In this manner, the tower boom 24 can perform derricking (raising or lowering) via the pendant rope 229.

Fig. 4 is a block diagram illustrating a control system of the crane 20.

As illustrated in the drawing, the crane 20 includes the controller 31 that comprehensively controls each part of the crane 20. More specifically, the controller 31 performs control of various operations such as traveling, turning, and load suspending of the crane 20, and an abnormality detecting process. The controller 31 is configured to include an arithmetic processing device having a CPU, a ROM and a RAM which are storage devices, and other peripheral circuits.

In addition, as sensors for acquiring information relating to a state of each part of the crane 20, the crane 20 includes a load cell 321, a boom angle sensor 322, a manipulated variable sensor 323, a jib angle sensor 324, an inclination sensor 325, and a lift meter 326.

The load cell 321 is attached to the boom spreader 228, detects tension acting on the boom derricking rope 291 that causes the tower boom 24 to perform derricking, and outputs a control signal corresponding to the detected tension to the controller 31.

The boom angle sensor 322 is attached to a base end side of the tower boom 24, detects a derricking angle (hereinafter, also referred to as a boom angle) of the tower boom 24, and outputs a control signal corresponding to the detected boom angle to the controller 31. For example, the boom angle sensor 322 detects a ground angle which is an angle with respect to a horizontal plane, as a boom angle.

The jib angle sensor 324 is attached to the base end side of the tower jib 25, detects a derricking angle (hereinafter, also referred to as a jib angle) of the tower jib 25, and outputs a control signal corresponding to the detected jib angle to the controller 31. For example, the jib angle sensor 324 detects a ground angle which is an angle with respect to a horizontal plane, as a jib angle.

For example, the manipulated variable sensor 323 detects an operation amount of a hydraulic pilot-type operation lever, and outputs a control signal corresponding to the detected operation amount to the controller 31.

The inclination sensor 325 detects inclination of the crane 20, that is, inclination of the ground on which the crane 20 is located, and outputs the inclination to the controller 31.

The lift meter 326 detects a height position of the suspended load hook 28, and outputs the height position to the controller 31.

In addition, the crane 20 includes an input unit 331, a display device 332, an alarm device 341, a stop device 342, a first communication unit 351, a second communication unit 352, an operation lever 37, and a control valve 38.

For example, the input unit 331 is a touch panel, and outputs a control signal corresponding to an operation from a worker to the controller 31. The worker can operate the input unit 331 to set the number of application times of the main winding rope 256, the tower boom length, and the mass of the suspended load hook 28.

For example, the display device 332 includes a touch panel-type display that is also used as the input unit 331, and displays information on a suspended load or information on a work posture on a display screen, based on a control signal output from the controller 31.

The alarm device 341 issues an alarm, based on a control signal output from the controller 31.

The stop device 342 stops driving a hydraulic motor (not illustrated) connected to each of the main winding winch 245 and the jib derricking winch 244, based on a control signal output from the controller 31. For example, the stop device 342 is an electromagnetic switching valve that can cut off the supply of pressure oil from a hydraulic pump to a hydraulic motor.

The first communication unit 351 performs data communication with the base station 120 via the satellite 110.

The second communication unit 352 directly performs data communication with the base station 150.

The control valve 38 is configured to include a plurality of valves that can be switched in accordance with a control signal from the controller 31.

For example, the control valve 38 includes a valve for hydraulic pressure supply, interruption, and rotation direction switching from the hydraulic pump included in the crane 20 to the hydraulic motor that rotationally drives drive wheels of the lower traveling body 21, a valve for hydraulic pressure supply, interruption, and rotation direction switching from the hydraulic pump to the hydraulic motor that performs a turning operation of the rotating platform 22, a valve for hydraulic pressure supply, interruption, and rotation direction switching from the hydraulic pump to the hydraulic motor that rotationally drives the tower boom derricking winch, a valve for hydraulic pressure supply, interruption, and rotation direction switching from the hydraulic pump to the hydraulic motor that rotationally drives the jib derricking winch 244, and a valve for hydraulic pressure supply, interruption, and rotation direction switching from the hydraulic pump to the hydraulic motor that rotationally drives the main winding winch 245.

The operation lever 37 is configured to include a plurality of levers for inputting control signals for individually performing switching to various valves of the control valve 38 through the controller 31.

For example, a traveling lever which is one of the operation levers 37 inputs a switching signal to a valve that performs hydraulic pressure supply, interruption, and rotation direction switching for the hydraulic motor that rotationally drives the drive wheels of the above-described lower traveling body 21.

In addition, a turning lever which is one of the operation levers 37 inputs a switching signal to a valve that performs hydraulic pressure supply, interruption, and rotation direction switching from the above-described hydraulic pump to the hydraulic motor that performs a turning operation of the rotating platform 22.

In addition, a boom derricking lever which is one of the operation levers 37 inputs a switching signal to a valve that performs hydraulic pressure supply, interruption, and rotation direction switching from the above-described hydraulic pump to the hydraulic motor that rotationally drives the tower boom derricking winch.

In addition, a jib derricking lever which is one of the operation levers 37 inputs a switching signal to a valve that performs hydraulic pressure supply, interruption, and rotation direction switching from the above-described hydraulic pump to the hydraulic motor that rotationally drives the jib derricking winch 244.

In addition, a winding lever which is one of the operation levers 37 inputs a switching signal to a valve that performs hydraulic pressure supply, interruption, and rotation direction switching from the above-described hydraulic pump to the hydraulic motor that rotationally drives the main winding winch 245.

The controller 31 inputs control signals corresponding to hydraulic pressure supply, interruption, and rotation direction switching to each valve configuring the corresponding control valve 38 in accordance with an operation of various levers configuring the operation lever 37, and performs control on each hydraulic motor.

In this manner, the worker operates the operation lever 37. In this manner, the worker can perform a traveling operation of the crane 20, a turning operation of the rotating platform 22, a derricking operation of the tower boom 24, a derricking operation of the tower jib 25, and raising and lowering operations of the suspended load hook 28.

### [Management Server]

Fig. 5 is a block diagram illustrating a configuration of the management server 50.

As illustrated in the drawing, the management server 50 has a control device 51, a storage unit 52, and a communication unit 53.

The control device 51 includes an arithmetic processing device having a CPU and peripheral circuits. The control device 51 controls each unit of the management server 50 by reading and executing a control program stored in advance in the storage unit 52.

For example, the storage unit 52 is a non-volatile storage device.

The communication unit 53 performs data communication (transmission and reception) via the network 130 in accordance with a predetermined procedure.

A display device 54 is connected to the control device 51, and the control device 51 causes a display screen of the display device 54 to display information stored in the storage unit 52, the inspection information database 140, and the customer information database 160.

The inspection information database 140 and the customer information database 160 are connected to the control device 51.

The inspection information database 140 stores data in association with date and time information, a work machine ID of the crane 20, and a diagnosis result which are received from the moving body 40 via the base stations 120 and 150 (including a case of receiving information via the crane 20) by the control device 51.

The customer information database 160 stores data in association with the work machine ID of the crane 20, customer information relating to a customer who owns the crane 20, and a delivery destination address of the customer. The delivery destination address of the customer corresponding to one work machine ID can be set in any desired way.

In this manner, when the information in the inspection information database 140 of the crane is updated for the specific crane 20, the control device 51 specifies the customer and the delivery destination thereof, and transmits the updated information on the crane 20, or notifies the updated information. In addition, when there is an access from the customer side, the control device 51 may allow transmitting or reading various information recorded in the inspection information database 140 of the crane relating to the crane 20 of the customer. In this case, a password may be set for each customer in the customer information database 160, and the password may be requested when there is an access from the customer side. It is preferable that the password is registered in the customer information database 160.

The control device 51 performs a diagnostic process for determining whether or not there is an abnormality in inspection locations of the crane 20 with respect to the following inspection items, based on the diagnostic information data including the captured image data and the detection data which are acquired from the moving body 40.

The inspection items are as follows, for example.
(1) Crack, deformation, damage, and corrosion in a tower boom and a tower jib
(2) Abrasion and damage in a foot pin, a joint pin, and a bush
(3) Abrasion, damage, random winding, terminal state, and corrosion of a wire rope
(4) Damage and corrosion in a pendant rope
(5) Crack, deformation, damage, and corrosion in each spreader, a hanger, and a tower strut
(6) Crack, deformation, abrasion, and corrosion of a suspended load hook
(7) Operation state, deformation, and damage in a wire detachment stopper of the suspended load hook
(8) Loosening of a nut of the suspended load hook, and damage and corrosion in a screw portion
(9) Abrasion, deformation, damage, and corrosion in each sheave
(10) Operation state of an excessive winding prevention device in the suspended load hook, the tower boom, and the tower jib
(11) Operation state of a load cell and a boom angle sensor
(12) Deformation, damage, and corrosion in a backstop
(13) Whether or not an attachment is attached to a regular position, and an attachment state (bolt tightening omission or bolt missing)

### [Information Terminal]

Fig. 6 is a block diagram illustrating a schematic control system of the information terminals 60 and 70. Since the information terminals 60 and 70 of the present embodiment are configured in substantially the same manner, the information terminal 60 will be described below, and description of the information terminal 70 will be omitted.

For example, the information terminal 60 is a terminal device such as a personal computer, a smartphone, and a tablet terminal, and includes an input unit 61, a display unit 62, a communication unit 63, a storage unit 64, and a control unit 65 as illustrated in Fig. 6.

For example, the input unit 61 includes a touch panel, and outputs an input signal corresponding to operation contents of a user operating the touch panel to the control unit 65.

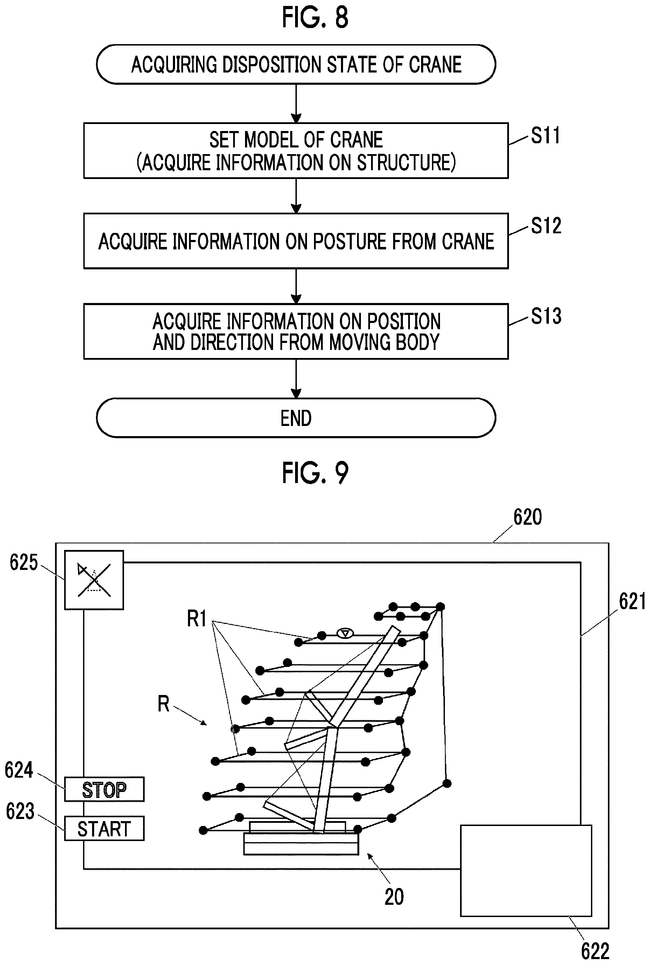

For example, the display unit 62 includes a touch panel-type display 620 (refer to Fig. 9), and displays various information on the display 620, based on a display signal input from the control unit 65.

The communication unit 63 can perform data communication (transmission and reception) with the crane 20, the moving body 40, and the management server 50 via the network 130. The communication unit 63 may be configured to be capable of direct communication with the crane 20, the moving body 40, and the management server 50.

The storage unit 64 is a memory including a Random Access Memory (RAM) or a Read Only Memory (ROM), stores various programs and data, and also functions as a work region of the control unit 65.

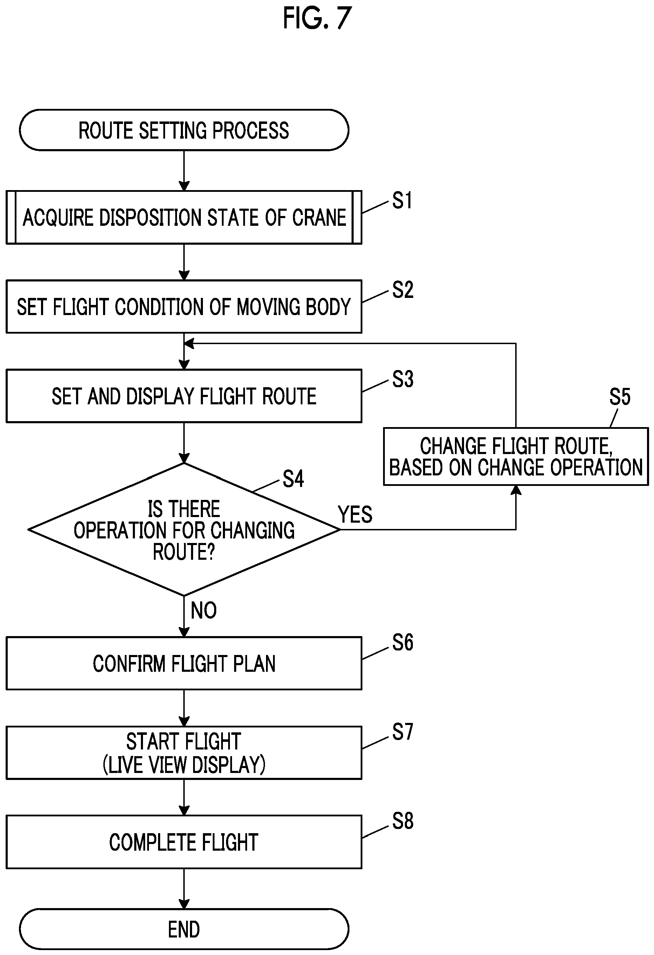

In the present embodiment, the storage unit 64 prestores a route setting program 641 for performing a route setting process (refer to Fig. 7) to be described later.

In addition, the storage unit 64 has a crane information database (DB) 642 which stores various information relating to the crane.

In the crane information DB 642, a plurality of model information (model name) and information relating to a structure of each model (including a shape and a main dimension of each part) are stored in association with each other. For example, the information relating to the structure of the crane includes a type such as a derricking method (A-frame, live mast, or both of these), a tower jib derricking method (swing lever or rougher), and a front specification (crane only, tower only, or both of these).

The crane information DB 642 may be stored in another device (for example, the management server 50) with which the information terminal 60 can communicate (read information).

The control unit 65 comprehensively controls the information terminal 60, based on a user operation. Specifically, the control unit 65 reads various programs from the storage unit 64 in response to an operation signal input from the input unit 61, performs a predetermined process in accordance with the program, temporarily stores a process result thereof in the storage unit 64, and appropriately outputs the process result to the display unit 62.

### [Setting Flight Route of Moving Body]

Subsequently, a route setting process for setting a flight route (movement route) of the moving body 40 during an inspection of the crane 20 will be described.

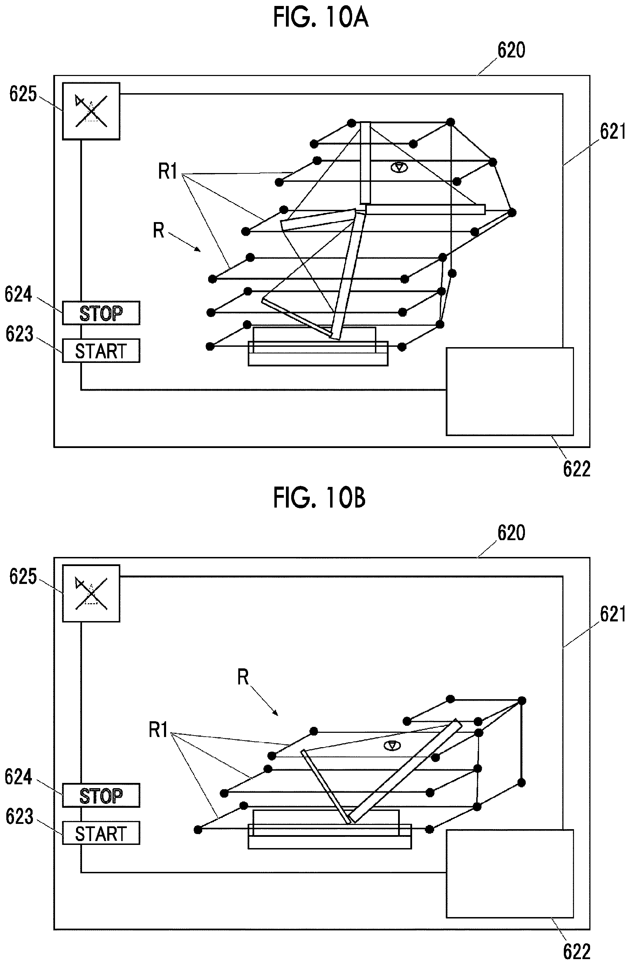

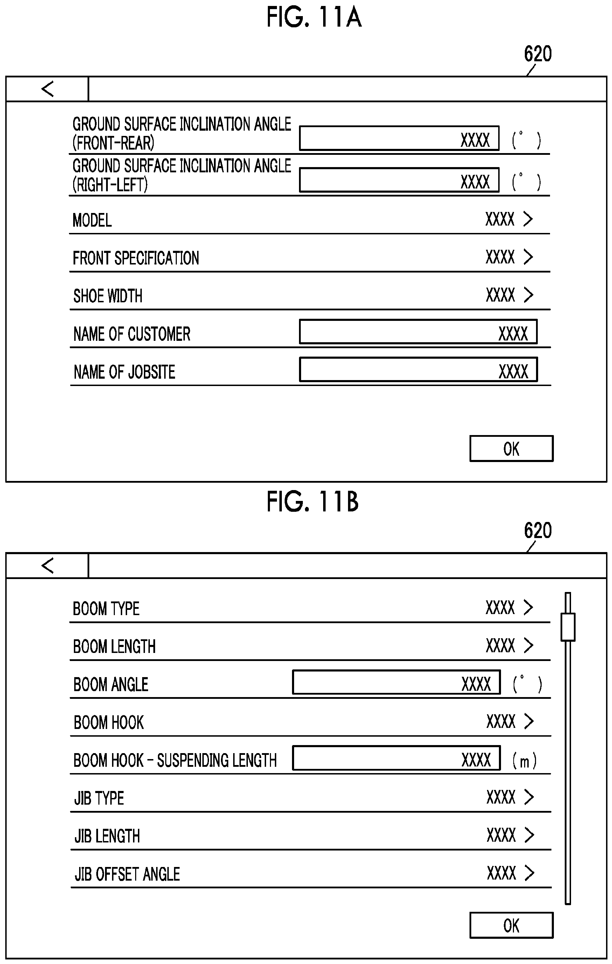

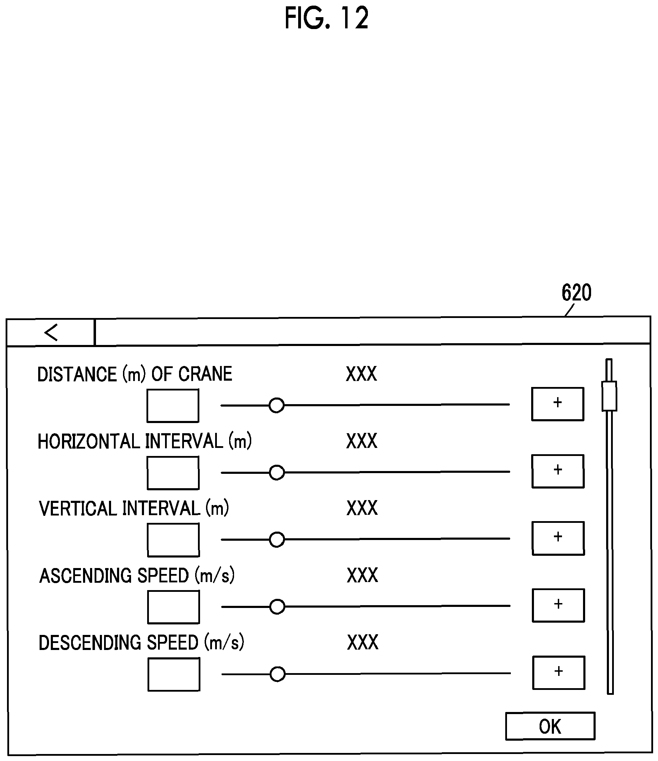

Figs. 7 and 8 are flowcharts illustrating a flow of the route setting process. Fig. 9 is a view illustrating a display example of the movement route of the moving body 40, and Figs. 10A and 10B are views illustrating a display example of a movement route of the moving body 40 in a crane having a structure different from that of the crane 20 of the present embodiment. Figs. 11A, 11B, and 12 are examples of information setting screens in the route setting process.

Here, a case where a user operates the information terminal 60 to perform the route setting process and sets the flight route of the moving body 40 will be described. The route setting process is performed in such a manner that the control unit 65 of the information terminal 60 reads the route setting program 641 from the storage unit 64 and develops the route setting program 641.

Here, it is assumed that the crane 20 is stationary in an assembled state. In addition, in the following description, in the route setting process, the moving body 40 flies along the flight route after the flight route is set. However, the flight of the moving body 40 may not be included in the route setting process.

As illustrated in Fig. 7, when the route setting process is performed, first, the control unit 65 acquires data of a disposition state of the crane 20 (hereinafter, referred to as "disposition state data") (Step S1).

Here, the "disposition state" of the crane 20 refers to a state relating to at least one of a structure (including a size and a shape), a posture, a position, and a direction of the crane 20.

Specifically, here, as illustrated in Fig. 8, the control unit 65 first sets a model of the crane 20, based on a user operation (Step S11). When the user selects the model of the crane 20 by the input unit 61, the control unit 65 reads information relating to the structure (including the size and the shape) of the model from the crane information DB 642, and sets the information. In addition, when there is a dimension (for example, a boom length) that cannot be specified only by selecting the model, the control unit 65 sets the dimension, based on the user operation. Here, for example, an information setting screen as illustrated in Fig. 11A is displayed on the display 620, and a user input is received, or various set information is displayed. In Fig. 11A, when the model is selected, options of front specifications (crane or tower) or shoe widths are read from the crane information DB 642, and information can be selected from the options.

Next, the control unit 65 acquires information relating to the posture of the crane 20 from the crane 20 itself via the communication unit 63 (Step S12). Specifically, the control unit 65 acquires a boom angle, a jib angle, an inclination of the crane 20, and a height of the suspended load hook 28 which are measured by the boom angle sensor 322, the jib angle sensor 324, the inclination sensor 325, and the lift meter 326 of the crane 20, as information relating to the posture of the crane 20. Furthermore, information relating to a surrounding environment such as an inclination angle of the ground, a wind speed, and the weather may be acquired. The information may be acquired by providing a sensor for that purpose, or may be acquired from the network 130. Here, for example, an information setting screen as illustrated in Fig. 11B is displayed on the display 620, and various set information is displayed. In addition, in Fig. 11B, when the model is selected on the screen in Fig. 11A, options such as a type and a length of the boom are read from the crane information DB 642, and information such as the type and the length of the boom can be selected from the options.

The measured boom angle, jib angle, inclination of the crane 20, and height of the suspended load hook 28 may be displayed on the display device 332 of the crane 20, and the user may input a measurement value to the information terminal 60 while viewing the display.

Next, the control unit 65 acquires the information relating to the position and the direction of the crane 20 by the positioning unit 421 and the direction sensor 422 of the moving body 40 (Step S13). Specifically, the moving body 40 is stopped (placed) at a predetermined position (for example, on a crawler) of the crane 20, and measures the position and the direction by the positioning unit 421 and the direction sensor 422 to acquire the information relating to the position and the direction of the crane 20. Specifically, the moving body 40 is stopped at two locations on the crawler in the front-rear direction to acquire an azimuth angle from latitude and longitude information of the moving body 40 placed at these two locations. At this time, one moving body 40 may sequentially move to two locations to acquire the latitude and longitude information, or two moving bodies 40 may individually move to two locations to acquire the latitude and longitude information.

The crane 20 may be provided with the positioning unit and the direction sensor, and the position and the direction of the crane 20 may be measured by the positioning unit and the direction sensor. In addition, the position and the direction of the crane 20 may be acquired by a direct input (numerical value input) of the user. In addition, a distance measuring sensor may be mounted on the moving body 40, and the position of the crane 20 may be measured from the moving body 40 by the distance measuring sensor.

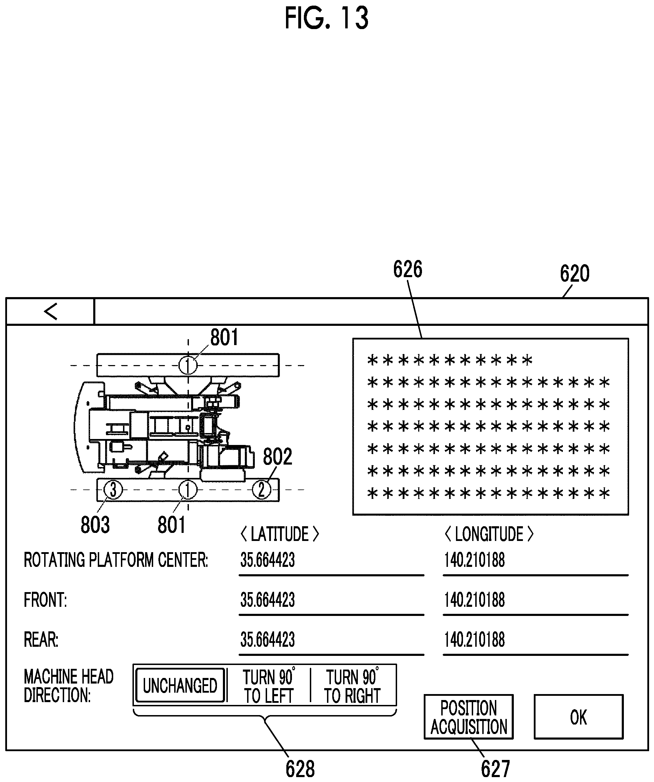

Fig. 13 is an example of a setting screen for acquiring the information on the position and the direction of the crane. In a process in Step S13, the setting screen as illustrated in Fig. 13 may be displayed on the display 620. In an explanation column 626 of the setting screen, an explanation is displayed to place the moving body 40 at a plurality of predetermined locations on the lower traveling body 21 of the crane 20 and to operate a position acquiring operation unit 627 each time. For example, the plurality of predetermined locations may include a center location 801 on one side crawler (location where a turning center is located at the center in the width direction of the shoe and in the width direction), and a front location 802 and a rear location 803 on one side crawler. The plurality of predetermined locations may include locations on both right and left crawlers, or the placement location may be selectable in any of the right and left crawlers. The user places the moving body 40 at a predetermined location in accordance with the display in the explanation column 626, and operates the position acquiring operation unit 627. In this manner, the position and the direction of the lower traveling body 21 of the crane 20 are registered.

Furthermore, the setting screen for acquiring the information on the position and the direction of the crane 20 may include an operation unit 628 capable of inputting the direction of the rotating platform 22 (machine head) with respect to the lower traveling body 21. The user can select the above-described direction by the operation unit 628. The selectable direction may include forward moving (turning 0 degrees), left turning (90 degrees to the left), and right turning (90 degrees to the right). The direction of the rotating platform of a crane image on the setting screen may be changed depending on the direction selection.

The control unit 65 can acquire the positions and the directions of the lower traveling body 21 and the rotating platform 22 of the crane 20 by the disposition movement of the moving body 40 and the operation of the setting screen as described above.

In this way, in Steps S11 to S13, disposition state data relating to at least one of the structure, the posture, the position, and the direction of the crane 20 is acquired, and a disposition state of the crane 20 is specified by surrounding information obtained from an aerial photograph or map information and the disposition state data.

In addition, any one of the disposition state data of the crane 20 may be acquired from the crane 20. In addition, the disposition state data is not limited to data acquired by the above-described method, and data acquired in advance may be used. For example, when there is information on the disposition state acquired in advance by the crane 20 for derricking restriction or hoisting restriction, this information may be diverted. In this manner, input time and effort can be reduced.

In addition, it is desirable that the user is caused to confirm setting contents of the disposition state after the disposition state of the crane 20 is specified in Step S1. In this case, for example, the display 620 displays the direction of the crane 20 and a maximum planned flight line (outline of the flight route) on an aerial photograph map. Then, the user is caused to confirm whether the flight route of the moving body 40 or the crane 20 is out of a predetermined site, or whether the position or the posture of the crane 20 is correct.

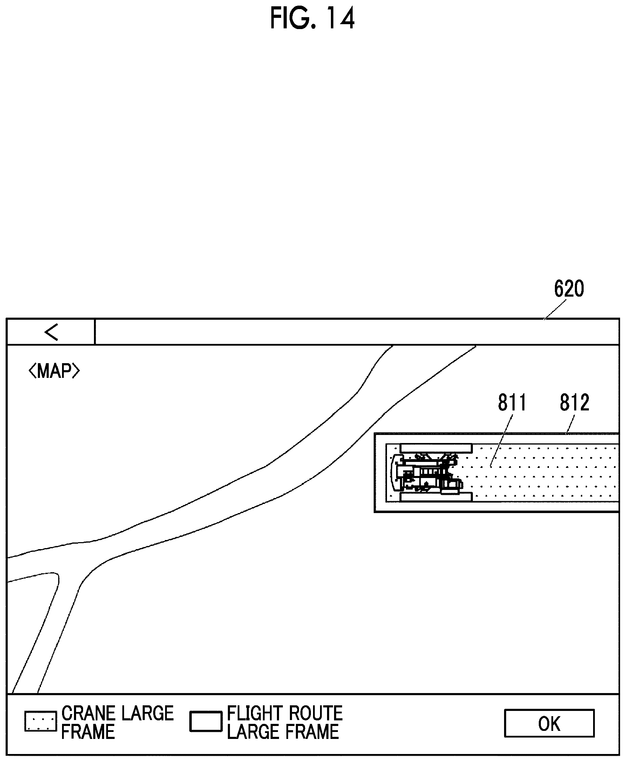

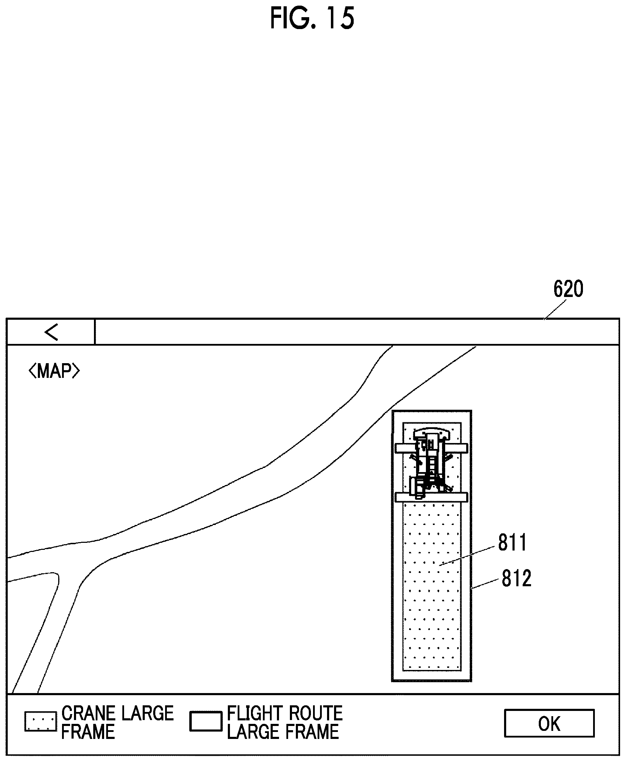

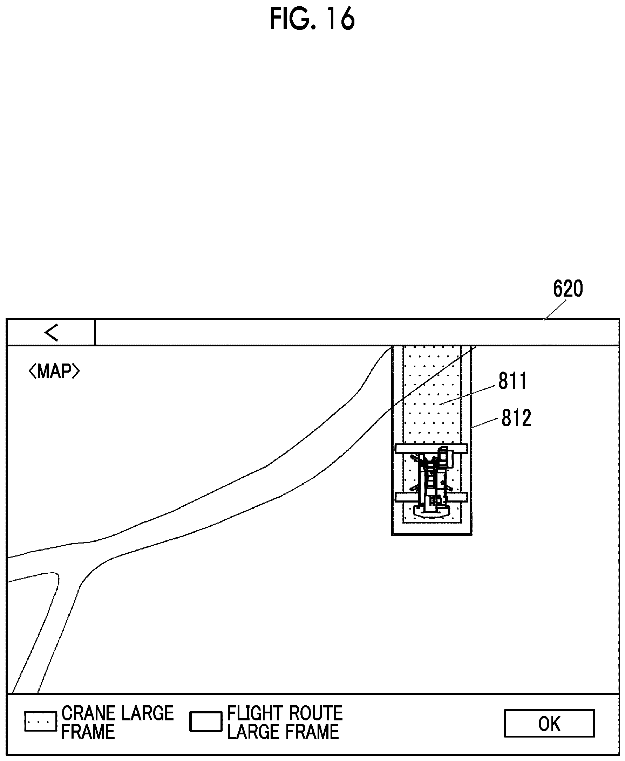

Figs. 14 to 16 are examples of confirmation screens of setting information. On the confirmation screens of the setting contents, a large frame (crane large frame) 811 including the whole crane 20 including the front attachment 23 and a large frame 812 of the flight route are displayed on a map image. Even when the position and the direction of the lower traveling body 21 of the crane 20 are the same, as illustrated in Figs. 14 to 16, when the direction of the rotating platform 22 with respect to the lower traveling body 21 is different, the disposition of the crane large frame 811 and the large frame 812 of the flight route is also different. That is, display positions of the crane large frame 811 and the large frame 812 of the flight route on the confirmation screens in Figs. 14 to 16 vary depending on the settings of the direction of the rotating platform 22 (machine head) on the setting screen in Fig. 13.

The user views the above-described confirmation screen. In this manner, the user can confirm whether or not a flight route R of the crane 20 or the moving body 40 is located within a predetermined site. The information on the map image may be stored in the storage unit 64 in advance, or may be acquired from another terminal via the network 130.

Next, as illustrated in Fig. 7, the control unit 65 sets a flight condition (flight information) of the moving body 40 (Step S2) .

In the present embodiment, a lower limit (closest approach distance) of a distance between the moving body 40 and the crane 20 during the flight is set as the flight condition of the moving body 40. The "distance" in this case is not particularly limited, but refers to the distance in a horizontal plane. Here, for example, an information setting screen as illustrated in Fig. 12 is displayed on the display 620, and receives a user input, or displays various set information.

Next, the control unit 65 sets the flight route R of the moving body 40, based on the disposition state data of the crane 20 acquired in Step S1 and the flight condition set in Step S2, and causes the display 620 to display the flight route R (Step S3).

In the present embodiment, the flight route R as illustrated in Fig. 9 is set and three-dimensionally displayed on the display 620. The flight route R is configured such that an orbital route R1 orbiting (one round) around the crane 20 in the horizontal plane is set in a plurality of layers via a predetermined vertical distance over the entire height of the crane 20. The orbital route R1 of each layer is set to orbit around the crane 20 in the horizontal plane via the distance set in Step S2. The vertical distance between the layers may be a predetermined default value, or may be set in Step S2. In this manner, the flight route R for orbiting around the whole crane 20 (particularly, the whole attachment) is set.

It is preferable that a flight order of the flight route R is as follows. First, after flying the orbital route R1 in the lowest layer, the flight ascends to the highest layer, and descends while sequentially orbiting from the orbital route R1 in the highest layer to the orbital route R1 which is the second from the lowest layer. In this way, the moving body 40 flies one round of a partial route R1 in the lowest layer to confirm the distance, and subsequently flies over the highest layer (above the crane 20). In this manner, it can be confirmed that the flight route R does not come into contact with the crane 20. When the lowest layer and the highest layer are confirmed, it is possible to confirm the center position or whether or not the setting contents are correct. In addition, after safety in the lowest layer is confirmed, the moving body 40 turns around a high place at an early stage when a power source (for example, a battery) of the moving body 40 has a large residual quantity. In this manner, even when the moving body 40 falls due to the exhausted residual quantity of the power source during the flight, a falling altitude thereof can be kept as low as possible.

In Step S3, the whole crane 20 is schematically displayed on a main window 621 of the display 620, and the flight route R for orbiting around the crane 20 is displayed together. In addition, for example, when any one of the orbital routes R1 is selected by the user, the orbital route R1 is displayed in a plane on a sub-window 622 at a right corner of the display 620 (not illustrated). In addition, a start button 623 and a stop button 624 for starting and stopping the flight of the moving body 40 are displayed at a left corner of the display 620 (at this time, one of the buttons that can be operated is actively displayed, and the other is non-actively displayed). In addition, a direction display unit 625 indicating the direction of the moving body 40 is displayed.

Fig. 9 illustrates a display example of the flight route R when the derricking method of the tower jib is a swing lever as in the crane 20 of the present embodiment. However, when the derricking method of the tower jib is a rougher, as illustrated in Fig. 10A, the flight route R is displayed. When the front specification is a crane instead of the tower, the flight route R is displayed as illustrated in Fig. 10B.

Next, as illustrated in Fig. 7, the control unit 65 determines whether or not an operation for changing the flight route R is performed (Step S4), and when it is determined that the operation is performed (Step S4; Yes), the flight route R is changed, based on a change operation thereof (Step S5). Then, the control unit 65 proceeds to the process in Step S3 described above, sets the flight route R to the changed one, and causes the display 620 to display the changed flight route R.

In addition, when it is determined in Step S4 that the operation for changing the flight route R is not performed (Step S4; No), the control unit 65 confirms a flight plan, based on the user operation (Step S6).

Here, as the flight plan, for example, the number of imaging times or an imaging period of time is set by the user.

Next, the control unit 65 starts the flight of the moving body 40 (Step S7), and causes the moving body 40 to fly along the flight route R set in Step S3. The control unit 44 of the moving body 40 acquires the captured image data and the detection data during the flight, and transmits diagnostic information data including the captured image data and the detection data to the information terminals 60 and 70 and the management server 50. The management server 50 performs a diagnostic process for determining the presence or absence of abnormality at a predetermined inspection location of the crane 20, based on the received diagnostic information data. The diagnostic process may be performed by the information terminals 60 and 70. In addition, during the automatic flight of the moving body 40, the flight can be temporarily stopped by the user operation. During the temporary stop, the moving body 40 can be manually operated, and in this manner, the inspection can be performed more thoroughly. When the temporary stop is released, the automatic flight of the moving body 40 is restarted from an interrupted position.

At this time, the control unit 65 causes the display 620 to display the image captured by the camera 41 in a live view.

Thereafter, when the flight of the moving body 40 along the flight route R is completed (Step S8), the control unit 65 stops the moving body 40 at a predetermined position, and completes the route setting process.

In addition, when the control unit 65 causes the display 620 to display the flight route R after the image is captured by the moving body 40 and an imaging point P (refer to Fig. 9) in the flight route R is selected by the user operation, the control unit 65 may cause the display 620 to display the captured image at the imaging point P.

### [Technical Effect of Present Embodiment]

As described above, according to the present embodiment, the flight route R of the moving body 40 during the inspection is set, based on the disposition state relating to at least one of the structure, the posture, the position, and the direction of the crane 20.

In this manner, the flight route R of the moving body 40 can be automatically set by acquiring (detecting) the disposition state of the crane 20. Therefore, it is possible to easily set the movement route of the moving body 40, compared to the related art in which the user needs to identify the state of the crane during the inspection.

In addition, according to the present embodiment, the position of the crane 20 is measured by using the positioning unit 421 of the moving body 40.

Therefore, the position of the crane 20 can be suitably measured by using the relatively highly accurate positioning unit 421 of the moving body 40 without providing the positioner in the crane 20 itself. In addition, the user of the inspection system 100 can acquire the position information of the crane 20 only by placing the moving body 40 at a predetermined position.

In addition, according to the present embodiment, the crane information DB 642 in which the plurality of models of the crane 20 and the information relating to the structure of each model are associated with each other is stored in advance.

Therefore, the user can easily acquire the information relating to the structure of the crane 20 only by setting (inputting) the model information of the crane 20.

### [Others]

Hitherto, the embodiment of the present invention has been described. However, the present invention is not limited to the above-described embodiment.

For example, in the above-described embodiment, in the flight route R of the moving body 40, the orbital route R1 in the horizontal plane has the plurality of layers. However, the flight route of the moving body 40 during the inspection is not particularly limited, and for example, may include a route for orbiting in a vertical plane or a route along the boom or the jib.

In addition, a plurality of the moving bodies 40 may be caused to fly at the same time. In this case, an inspection time can be shortened by causing the plurality of moving bodies 40 to collect individual data (for example, capturing a moving image and capturing a still image). The flight routes R of the plurality of moving bodies 40 may be the same as or different from each other.

In addition, in Step S1 of the route setting process, the disposition state data of the crane 20 may be acquired from the crane 20 at a predetermined timing, and in Step S2 subsequent thereto, the movement route of the moving body 40 may be set (updated), based on the disposition state data acquired at the predetermined timing. That is, the processes in Steps S1 and S2 may be performed at any time (for example, at a regular time interval), or may be performed at a timing at which the disposition state of the crane 20 is changed. In this manner, the flight route can be suitably set (changed) even during the operation of the crane 20.

Furthermore, the route setting at the predetermined timing may be performed during the flight of the moving body 40 in Step S7.

In addition, in the above-described embodiment, the route setting process is performed by the route setting program 641 in the information terminal 60. However, the route setting process can be performed as long as the device can acquire the disposition state data of the crane 20 and has arithmetic capability. Therefore, the information terminal according to the present invention includes the crane 20 itself and the moving body 40, in addition to the information terminals 60 and 70 and the management server 50. Similarly, the processing unit that performs the process for performing the inspection on the crane 20 includes the crane 20 itself and the moving body 40, in addition to the information terminals 60 and 70 and the management server 50. In addition, the route setting unit according to the present invention may be different from the processing unit. For example, the processing unit may be the management server 50, and the route setting unit may be the information terminals 60 and 70.

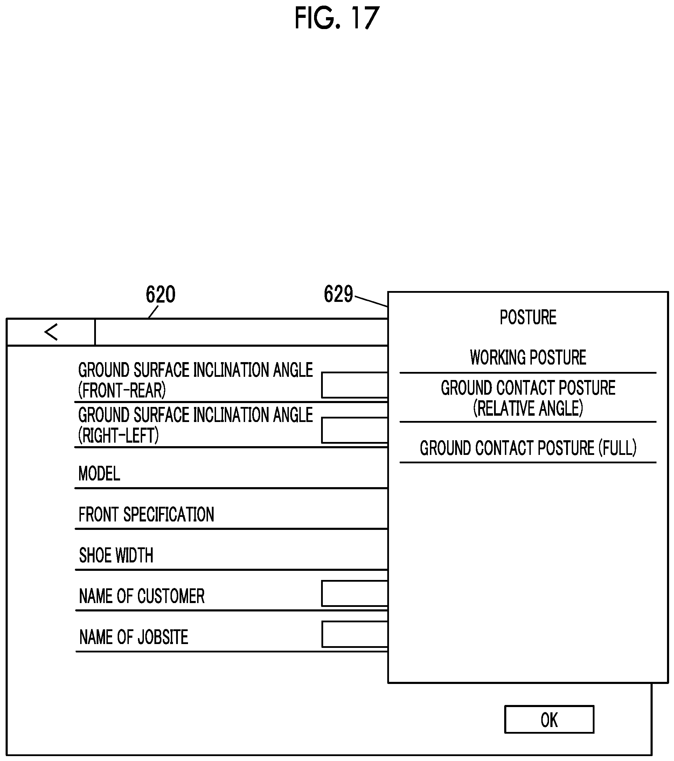

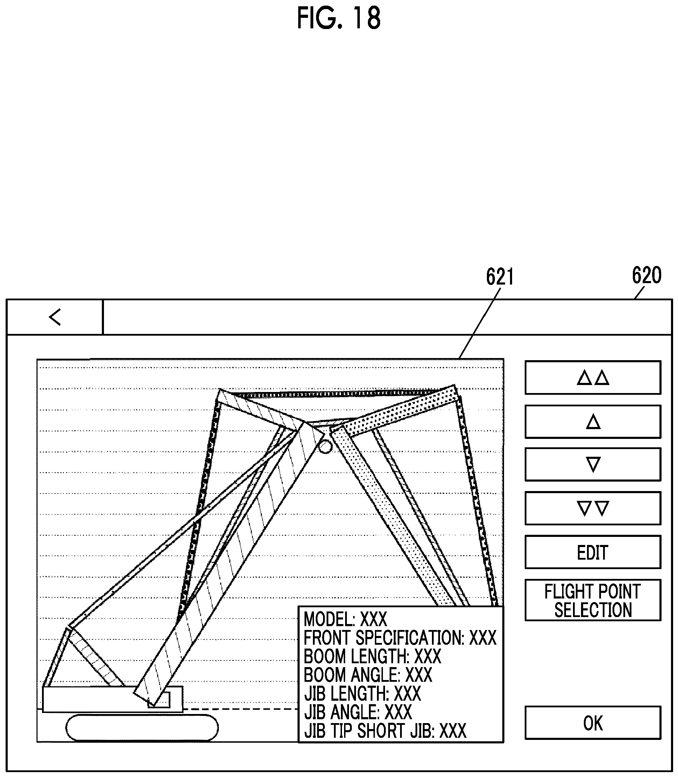

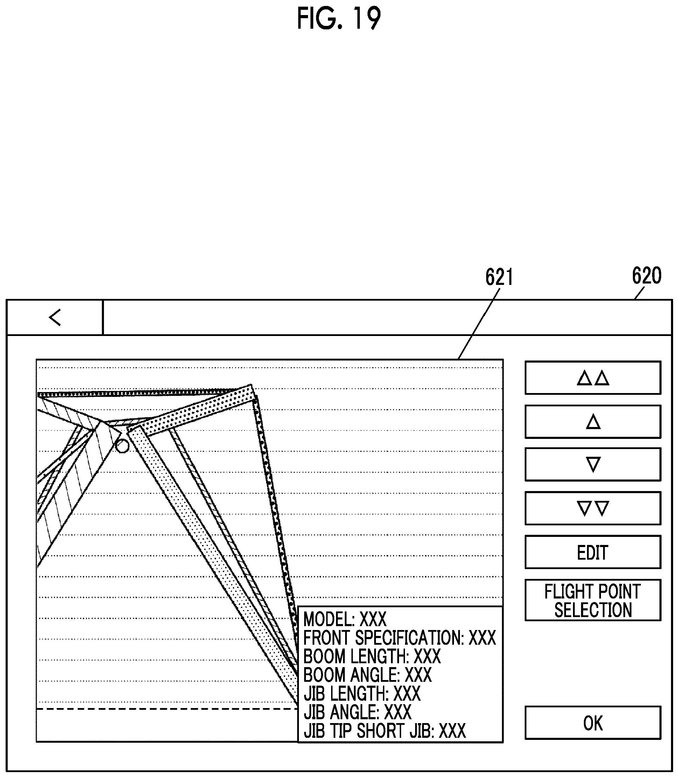

In addition, in the above-described embodiment, an example of setting the flight route of the moving body 40 corresponding to when the crane 20 is in a working posture has been described. However, the flight route of the moving body 40 may be set as follows. Fig. 17 is another example of the information setting screen in the route setting process. Figs. 18 and 19 are views illustrating a display example of the movement route (flight route) of the moving body. That is, on the information setting screen of the flight route illustrated in Figs. 11A, 11B, and 12, the user may be able to select the posture of the crane 20 through an expandable setting window 629 in Fig. 17. A selection item of the posture is not limited to a configuration included in the expandable setting window 629, and may be included in the setting item in Fig. 11A. For example, in addition to the working posture, the selectable postures may include a relative angle ground contact posture (posture in which the boom is laid down in a state where a certain relative angle is formed between the boom and the jib), a full ground contact posture (posture in which the boom is laid down in a state where the jib is stretched), and a vehicle resting posture such as a jib-retracted vehicle resting posture (posture in which the boom is laid down in a state where the jib is folded with respect to the boom). Then, the control unit 65 may set the flight route of the moving body 40, based on the selected posture. The flight route when the vehicle resting posture is selected is a long route in the horizontal direction. Therefore, as illustrated in Figs. 18 and 19, a display mode in which a display position can be scrolled in any desired direction (only the horizontal direction may be used), and a display mode in which display magnification can be changed, or both of these may be applied to the main window 621 that displays the movement route (flight route) of the moving body. The scrolling may be realized by the user sliding a touch position of the screen, and the display magnification may be realized by a pinch operation.

In addition, in the above-described embodiment, a mobile tower crane has been described as an example of the crane 20. However, the present invention is not limited thereto, and in addition to other mobile cranes such as a wheel crane, a truck crane, a rough terrain crane, and an all-terrain crane, the present invention is applicable to various cranes such as a tower crane, an overhead crane, a jib crane, a retractable crane, a stacker crane, a portal crane, and an unloader.

Furthermore, the present invention is not limited to the crane provided with the suspended load hook, and is also applicable to a crane that suspends attachments such as a magnet and an earth drill bucket.

In addition, in the above-described embodiment, the crane 20 is the inspection target of the moving body 40. However, the present invention is suitably applicable to various inspection targets whose disposition state varies. In addition to the crane, this inspection target includes play equipment such as a Ferris wheel and a jet coaster, a windmill, an excavator, an airplane, and a ship. The present invention is also applicable to an inspection of an existing building.

In addition, the present invention is not limited to those which perform an inspection (diagnostic process) based on an image, and is also applicable to imaging which is not intended for the inspection, for example, when a captured image is displayed to an inspection operator.

Alternatively, details in the above-described embodiment can appropriately be changed within the scope not departing from the concept of the invention.

### Industrial Applicability

The present invention can be used for a crane inspection system, an inspection system, a route setting program, and an information terminal.

### Reference Signs List

20 crane
23 front attachment
31 controller
40 moving body (processing unit, information terminal)
41 camera (imaging unit)
44 control unit
50 management server (processing unit, information terminal)
60 information terminal (processing unit)
61 input unit
62 display unit
63 communication unit
64 storage unit
65 control unit
70 information terminal (processing unit)
100 crane inspection system
322 boom angle sensor
324 jib angle sensor
325 inclination sensor
326 lift meter
421 positioning unit (positioner)
422 direction sensor
620 display
641 route setting program
642 crane information database
R flight route (movement route)
R1 orbital route

## Claims

1. A crane inspection system comprising:
a moving body including an imaging unit and moving around a crane;
a processing unit configured to perform an inspecting process, based on imaging data captured by the imaging unit; and
a route setting unit configured to set a movement route of the moving body during an inspection, based on a disposition state relating to at least one of a structure, a posture, a position, and a direction of the crane.

2. The crane inspection system according to claim 1, further comprising:
an information acquisition unit configured to acquire disposition state information relating to the disposition state of the crane.

3. The crane inspection system according to claim 2,
wherein the information acquisition unit acquires the disposition state information from the crane.

4. The crane inspection system according to claim 3,
wherein the information acquisition unit acquires the disposition state information from the crane at a predetermined timing, and
the route setting unit updates the movement route of the moving body, based on the disposition state information acquired at the predetermined timing by the information acquisition unit.

5. The crane inspection system according to any one of claims 2 to 4,
wherein the moving body includes a positioner configured to measure a position of the moving body, and
the information acquisition unit acquires position information of the crane, based on position information of the moving body which is acquired by the positioner.

6. The crane inspection system according to claim 5,
wherein the information acquisition unit measures a position of the crane by the positioner of the moving body placed at a predetermined position of the crane.

7. The crane inspection system according to any one of claims 2 to 6, further comprising:
a storage unit configured to pre-store a crane information database in which a plurality of models of the crane and information relating to a structure of each model are associated with each other,
wherein the information acquisition unit sets a model of the crane, based on a user operation, and reads and acquires information relating to the structure of the model from the crane information database.

8. An inspection system comprising:
a moving body including an imaging unit and moving around an inspection target whose disposition state varies;
a processing unit configured to perform an inspecting process, based on imaging data captured by the imaging unit; and
a route setting unit configured to set a movement route of the moving body during an inspection, based on a disposition state relating to at least one of a structure, a posture, a position, and a direction of the inspection target.

9. A route setting program for setting a movement route of a moving body moving around a crane, the program causing a computer to function as:
a route setting unit configured to set the movement route of the moving body, based on a disposition state relating to at least one of a structure, a posture, a position, and a direction of the crane.

10. An information terminal configured to set a movement route of a moving body moving around a crane, the information terminal comprising:
a route setting unit configured to set the movement route of the moving body, based on a disposition state relating to at least one of a structure, a posture, a position, and a direction of the crane.
